# EUROPEAN PATENT SPECIFICATION

(11) **EP 3 984 737 B1**
(45) Date of publication and mention of the grant of the patent: **29.05.2024**
(21) Application number: 20827269.0
(22) Date of filing: 04.06.2020
(51) Int. Cl.: B32B 5/24, B32B 5/02, B32B 27/04, B32B 27/12, D04H 3/005

(54) **SHEET FOR MOLDING AND MOLDED ARTICLE**
FOLIE ZUM FORMEN UND FORMARTIKEL
FEUILLE POUR MOULAGE ET ARTICLE MOULÉ

(30) Priority: 17.06.2019 JP 2019112206
(43) Date of publication of application: 20.04.2022
(73) Proprietor: TOYOBO MC Corporation, Osaka 530-0001 (JP)
(72) Inventor: INATOMI, Shinichiro, Osaka-shi, Osaka 530-8230 (JP); MATSUI, Mariko, Osaka-shi, Osaka 530-8230 (JP); YANE, Takehisa, Otsu-shi, Shiga 520-0292 (JP); TAGA, Keiko, Otsu-shi, Shiga 520-0292 (JP); TAKAGI, Naoki, Osaka-shi, Osaka 541-0056 (JP); SHIMODA, Masashi, Osaka-shi, Osaka 541-0056 (JP)
(74) Representative: Müller-Boré & Partner Patentanwälte PartG mbB
(86) International application number: PCT/JP2020/022173
(87) International publication number: WO 2020/255738

(56) References cited:
- EP-A1- 0 688 263
- WO-A1-99/26013
- WO-A1-2006/117868
- WO-A1-2018/225671
- JP-A- S4 713 676
- JP-A- 2009 127 169
- JP-A- 2009 533 238
- JP-A- 2010 023 275
- JP-A- 2016 108 706
- JP-B2- H0 726 309
- KR-B1- 100 957 621
- US-B2- 7 972 981

## Description

### TECHNICAL FIELD

The present invention relates to a sheet for molding including a resin layer, and a molded article.

### BACKGROUND ART

Conventionally, various sheets for molding are known. For example, Patent Document 1 discloses a spunbonded nonwoven fabric comprising polyethylene terephthalate and a thermoplastic polystyrene-based copolymer and being suitable for thermoforming applications. Furthermore, Patent Document 2 discloses a spunbonded nonwoven fabric suitable for thermoforming applications which exhibits a shrinkage ratio of an elongation direction length after standing for 30 minutes in an environment of 20°C relative to an elongation direction length after stretching by 150% in an environment of 130°C of 5% or less. Patent Document 3 describes a spunbond nonwoven fabric, which has high elongation rate when heated and low modulus when deformed by heating and is suitable for thermal molding. Patent Document 4 describes a microporous composite sheet material. Patent Document 5 describes an extrusion laminate of incrementally stretched nonwoven fibrous web and thermoplastic film and a method for the production thereof.

### RELATED ART DOCUMENT

### PATENT DOCUMENTS

Patent Document 1: JP-A-2017-222950
Patent Document 2: JP-A-2017-222951
Patent Document 3: JP 2016 108706 A
Patent Document 4: US 7 972 981 B2
Patent Document 5: EP 0 688 263 A1

### SUMMARY OF THE INVENTION

### PROBLEMS TO BE SOLVED BY THE INVENTION

Patent Documents 1 and 2 describe that a spunbonded nonwoven fabric suitable for thermoforming is used for a coffee filter material or the like. In recent years, there is an increasing demand for applying sheets for molding to various other applications.

The present invention has been made in view of the above circumstances, and an object of the present invention is to provide a sheet for molding that is easily used for various applications.

### SOLUTIONS TO THE PROBLEMS

A sheet for molding according to the present invention and a molded article obtained by molding the sheet for molding have the configurations as set out in the appended claims.

### EFFECTS OF THE INVENTION

According to the present invention, with the above configuration, it is possible to provide a sheet for molding that is easily used for various applications. In addition, various molded articles can be obtained by molding using the sheet for molding.

### BRIEF DESCRIPTION OF THE DRAWINGS

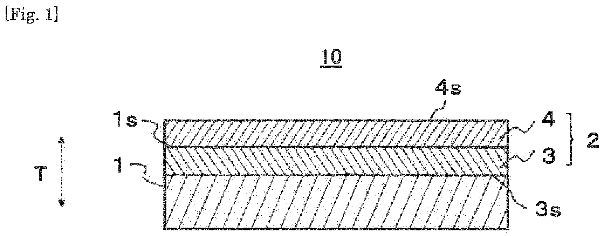

Fig. 1 is a cross-sectional view of a sheet for molding according to an embodiment of the present invention.

### MODE FOR CARRYING OUT THE INVENTION

The present invention will be specifically explained below based on the following embodiments, but the present invention is not restricted by the embodiments described below. In addition, sizes of various members in the drawings may differ from the actual sizes thereof because priority is given to understanding the features of the present invention.

the sheet for molding according to any one of above [1] to [7].

### EFFECTS OF THE INVENTION

According to the present invention, with the above configuration, it is possible to provide a sheet for molding that is easily used for various applications. In addition, various molded articles can be obtained by molding using the sheet for molding.

### BRIEF DESCRIPTION OF THE DRAWINGS

Fig. 1 is a cross-sectional view of a sheet for molding according to an embodiment of the present invention.

### MODE FOR CARRYING OUT THE INVENTION

The present invention will be specifically explained below based on the following embodiments, but the present invention is not restricted by the embodiments described below of course, and can be certainly put into practice after appropriate modifications within in a range meeting the gist of the above and the below, all of which are included in the technical scope of the present invention. In addition, sizes of various members in the drawings may differ from the actual sizes thereof because priority is given to understanding the features of the present invention.

The sheet for molding according to the present invention includes a nonwoven fabric and a resin layer laminated on the nonwoven fabric, wherein the nonwoven fabric includes a fiber having a birefringence Δn of 0.005 or more and 0.050 or less; and the resin layer includes a resin having a number average molecular weight of 5,000 or more and 150,000 or less, and has an infiltrating portion infiltrating into the nonwoven fabric and a non-infiltrating portion not infiltrating into the nonwoven fabric.

The present inventors have found that by virtue of the above configuration, it is possible to easily prevent breakage of the nonwoven fabric and the resin layer of the sheet for molding during molding processing. Since a molded article that has been molded using the sheet for molding having the above configuration includes a resin layer, various properties such as moisture barrier property, water barrier property, and durability are easily exhibited. Furthermore, when a filler having properties such as electromagnetic wave shielding property and sound absorbing property is contained in the resin layer, these properties can also be imparted to the molded article. That is, a sheet for molding having the above configuration is easy to use for various applications. Hereinafter, the sheet for molding according to an embodiment of the present invention will be described with reference to Fig. 1. Fig. 1 is a cross-sectional view of a sheet for molding according to an embodiment of the present invention.

As illustrated in Fig. 1, the sheet for molding 10 according to an embodiment of the present invention includes a nonwoven fabric 1 and a resin layer 2 laminated on the nonwoven fabric 1. Specifically, the resin layer 2 is laminated on the nonwoven fabric 1 in the form where the resin layer 2 partially infiltrates into the nonwoven fabric 1. That is, the resin layer 2 includes an infiltrating portion 3, in which the resin layer 2 infiltrates into the nonwoven fabric 1. By virtue of the inclusion of the infiltrating portion 3 in the resin layer 2, the resin layer 2 is less likely to be peeled off from the nonwoven fabric 1.

The average thickness of the infiltrating portion 3 is preferably 5 pm or more, and more preferably 10 µm or more. On the other hand, the upper limit of the average thickness of the infiltrating portion 3 is not particularly limited, and the average thickness may be, for example, 100 pm or less, or may be 80 pm or less, or may be 70 µm or less.

Further, the resin layer 2 includes a non-infiltrating portion 4, in which the resin layer 2 does not infiltrate into the nonwoven fabric 1. By virtue of the inclusion of the non-infiltrating portion 4, the resin layer 2 is less likely to be damaged during molding.

The average thickness of the non-infiltrating portion 4 is preferably 5 pm or more, and more preferably 10 µm or more. On the other hand, the upper limit of the average thickness of the non-infiltrating portion 4 is not particularly limited, and the average thickness may be, for example, 130 µm or less, or may be 80 µm or less, or may be 70 µm or less. The average thickness of the non-infiltrating portion 4 is preferably smaller than the average thickness of the nonwoven fabric 1, and more preferably 1/2 or less of the average thickness of the nonwoven fabric 1. As a result, it is possible to reduce unevenness of stress at the time of elongating the resin layer 2 to make it difficult to break the resin layer 2. The average thickness of the non-infiltrating portion 4 is preferably larger than the average thickness of the infiltrating portion 3. This makes it difficult for the resin layer 2 to peel off during molding.

The average thickness of the non-infiltrating portion 4 can be measured, for example, by the following method. First, in a region of 10 mm square on the surface 4s of the non-infiltrating portion 4 of the sheet for molding 10 are chosen and marked three points, and then the sheet for molding 10 is frozen with liquid nitrogen. Next, the sheet for molding 10 is cut in the thickness direction T such that each point can be observed. Thereafter, each cross section is observed with a stereomicroscope at a magnification of twice, and in the image, a straight line is drawn in the thickness direction T from one of the above three points (point A) on the surface 4s of the non-infiltrating portion 4. The distance (µm) between the point A and the intersection (point B) of the straight line and the surface 1s of the nonwoven fabric 1 is measured, and the average value thereof may be taken as the average thickness (µm) of the non-infiltrating portion 4.

The average thickness of the infiltrating portion 3 may be determined by, for example, measuring, in the image of each of the cross sections, the distance (µm) between the intersection (point C) of the straight line drawn in the thickness direction T and the infiltrating surface 3s of the infiltrating portion 3 and the point B of the surface 1s of the nonwoven fabric 1, and taking the average value thereof as the average thickness (µm) of the infiltrating portion 3. The infiltrating surface 3s in this case means a surface of the infiltrating portion 3 opposite from the surface 1s of the nonwoven fabric 1.

In Fig. 1 is laminated the resin layer 2 on one surface of the nonwoven fabric 1, but it may be laminated on both surfaces of the nonwoven fabric 1. It is preferable that the resin layer 2 is laminated on one surface of the nonwoven fabric 1 because the weight can be reduced. In addition, it is preferable that no other layer is formed on the surface 4s of the non-infiltrating portion 4 and the surface 4s is exposed. Accordingly, processability can be easily improved.

The nonwoven fabric 1 includes fibers having a birefringence Δn of 0.005 or more and 0.050 or less. When the birefringence (Δn) of the fibers is 0.005 or more, it is possible to improve the rigidity of the nonwoven fabric 1 to easily improve the shape retainability of a molded article. The birefringence (Δn) is preferably 0.007 or more, and more preferably 0.008 or more. On the other hand, when the birefringence (Δn) is 0.050 or less, processability can be easily improved. The birefringence (Δn) is preferably 0.020 or less, and more preferably 0.015 or less. Specifically, the birefringence (Δn) can be measured by a method described in Examples described later.

The content of fibers having a birefringence Δn of 0.005 or more and 0.050 or less in 100% by mass of the nonwoven fabric is preferably 70% by mass or more, more preferably 80% by mass or more, even more preferably 90% by mass or more, further preferably 95% by mass or more, particularly preferably 98% by mass or more, and most preferably 100% by mass.

As the fibers contained in the nonwoven fabric 1, polyester-based fibers are preferable. In addition, fibers such as polyamide-based fibers and polyolefin-based fibers may be used as the fibers contained in the nonwoven fabric 1. These may be used singly or two or more kinds thereof may be used in combination. Among them, thermoplastic polyester-based fibers are more preferable.

Examples of the polyester-based fibers include those containing polyethylene terephthalate as a main component. Polyethylene terephthalate is superior in mechanical strength, heat resistance, shape retainability, etc. In order to effectively exhibit such effects, the content of polyethylene terephthalate in the polyester-based fiber is preferably 90% by mass or more, more preferably 93% by mass or more, and even more preferably 94% by mass or more based on 100% by mass of the polyester-based fiber. On the other hand, the content of polyethylene terephthalate is preferably 99.8% by mass or less, more preferably 99.5% by mass or less, and even more preferably 98% by mass or less in consideration of the content of the high Tg organic compound described later. The polyester-based fiber may contain a polyester other than polyethylene terephthalate, such as polytrimethylene terephthalate, polybutylene terephthalate, or polyethylene naphthalate. The description of the content can be referred to when polyamide, polyolefin, or the like is used as a material of the fiber.

The fibers contained in the nonwoven fabric 1 preferably contain a thermoplastic resin having an intrinsic viscosity of 0.3 dl/g or more and 0.9 dl/g or less. The fibers preferably contain a high Tg organic compound higher in glass transition temperature than the thermoplastic resin.

The intrinsic viscosity is preferably 0.3 dl/g or more and 0.9 dl/g or less. When the intrinsic viscosity is adjusted to 0.3 dl/g or more, thermal degradation is less likely to occur, and the durability of the nonwoven fabric 1 can be improved. Therefore, the intrinsic viscosity is more preferably 0.4 dl/g or more, even more preferably 0.5 dl/g or more, and further preferably 0.55 dl/g or more. On the other hand, when the intrinsic viscosity is 0.9 dl/g or less, stress during thermoforming of the nonwoven fabric 1 can be easily reduced. Therefore, the intrinsic viscosity is more preferably 0.7 dl/g or less. The intrinsic viscosity can be determined, for example, by weighing 0.1 g of a polyethylene terephthalate resin, dissolving it in 25 ml of a mixed solvent of phenol/tetrachloroethane (60/40 (weight ratio)), measuring an intrinsic viscosity three times at 30°C using an Ostwald viscometer, and calculating the average value thereof.

Examples of the high Tg organic compound include polystyrene and a polystyrene-based copolymer. The polystyrene-based copolymer is preferably a thermoplastic polystyrene-based copolymer. The glass transition temperature of the polystyrene-based copolymer is preferably 100°C or more and 160°C or less. The polystyrene-based copolymer is more preferably incompatible with the thermoplastic resin. When the polystyrene-based copolymer is higher in glass transition temperature than the thermoplastic resin, the styrene-based copolymer is first solidified at the time of cooling of melt spinning, so that the orientation is inhibited and the crystallinity can be disturbed. As a result, the elongation at break of the obtained nonwoven fabric 1 can be easily improved, and the stress at the time of elongation can be easily reduced. Therefore, the glass transition temperature of the polystyrene-based copolymer is preferably 100°C or more, more preferably 110°C or more, and even more preferably 120°C or more. On the other hand, the glass transition temperature is preferably 160°C or less, and more preferably 150°C or less in consideration of spinning productivity. The glass transition temperature can be determined by performing measurement at a rate of heating of 20°C/min in accordance with JIS K 7122 (1987).

As the polystyrene copolymer, for example, at least one copolymer selected from the group consisting of a styrene-conjugated diene block copolymer, an acrylonitrile-styrene copolymer, an acrylonitrile-butadienestyrene copolymer, a styrene-acrylic acid ester copolymer, and a styrene-methacrylic acid ester copolymer is preferable. Among them, at least one copolymer selected from the group consisting of a styrene-acrylic acid ester copolymer and a styrene-methacrylic acid ester copolymer is more preferable, and a styrene-methacrylic acid ester copolymer is further preferable. Examples of the styrene-methacrylic acid ester copolymer include a styrene-methyl methacrylate-maleic anhydride copolymer. These may be contained singly or in combination. Examples of a commercially available product thereof include PLEXIGLAS HW55 from Rohm GmbH & Co. KG, which can exhibit superior effects with a small addition amount.

The content of the high Tg organic compound in the fibers contained in the nonwoven fabric 1 is preferably 0.02% by mass or more and 8% by mass or less where the amount of the fibers is 100% by mass. When the content is adjusted to 0.02% by mass or more, the effect of the above addition is easily obtained. Therefore, the content of the high Tg organic compound is more preferably 0.05% by mass or more, even more preferably 0.2% by mass or more, further preferably 2% by mass or more, and particularly preferably 4% by mass or more. On the other hand, when the content of the high Tg organic compound is 8% by mass or less, the difference in stretchability between the thermoplastic resin and the high Tg organic compound can be reduced and fibers can be made difficult to break. Therefore, the content of the high Tg organic compound is more preferably 8% by mass or less, even more preferably 7% by mass or less, and further preferably 6% by mass or less.

The fiber diameter of the fibers contained in the nonwoven fabric 1 is preferably 5 pm or more. When the fiber diameter is adjusted to 5 pm or more, the shape retainability of a molded article can be improved. Therefore, the fiber diameter is preferably 5 µm or more, more preferably 7 pm or more, and further preferably 12 µm or more. On the other hand, the upper limit of the fiber diameter is not particularly limited, and the fiber diameter may be, for example, 80 µm or less, or 60 pm or less, or 50 pm or less.

The nonwoven fabric 1 is preferably one in which fibers are not entangled. This makes the nonwoven fabric 1 easy to mold. The fibers contained in the nonwoven fabric 1 are preferably continuous fibers. By virtue of being continuous fibers, the force applied at the time of molding is uniformly dispersed, so that stress concentration is easily prevented and the shape retainability of a molded article can be improved. Therefore, the nonwoven fabric is preferably a spunbonded nonwoven fabric or a meltblown nonwoven fabric, and more preferably is a spunbonded nonwoven fabric.

The basis weight of the nonwoven fabric may be adjusted in consideration of rigidity after molding, etc., and is not particularly limited, and is preferably 20 g/m² or more and 500 g/m² or less. When the basis weight is 20 g/m² or more, the nonwoven fabric is difficult to break during molding. Therefore, the basis weight is more preferably 80 g/m² or more, and further preferably 150 g/m² or more. On the other hand, when the basis weight is 500 g/m² or less, the nonwoven fabric is easy to stretch during molding. Therefore, the basis weight is more preferably 400 g/m² or less, and further preferably 300 g/m² or less. Specifically, the basis weight of the nonwoven fabric can be measured by the method described in Examples described later.

The average thickness of the nonwoven fabric is preferably 100 pm or more and 3000 µm or less. When the thickness is 100 pm or more, the nonwoven fabric is difficult to break during molding. Therefore, the thickness is more preferably 200 pm or more, and further preferably 400 pm or more. On the other hand, when the thickness is 3000 pm or less, the nonwoven fabric is easy to stretch during molding. Therefore, the thickness is more preferably 2000 pm or less, and further preferably 1000 pm or less. Specifically, the average thickness of the nonwoven fabric can be measured by the method described in Examples described later.

The nonwoven fabric 1 preferably has an elongation at break of 200% or more after being heated at 130°C for 1 minute. This makes it easy to follow molding processing such as deep drawing molding. The elongation at break is more preferably 250% or more, even more preferably 260% or more, further preferably 280% or more, and particularly preferably 300% or more. On the other hand, the upper limit of the elongation at break may be about 500% or less, or may be 450% or less. The aforementioned elongation is a ratio of a length after elongation to an initial length, and for example, when an item of 100 mm long is elongated to a length of 250 mm, the elongation is 250%.

The nonwoven fabric 1 preferably has a stress of 40 N/5 cm or less in terms of a basis weight of 200 g/m² at 20% elongation after being heated at 130°C for 1 minute. This makes it possible to improve the mold followability during thermoforming. The stress at 20% elongation after being heated at 130°C for 1 minute is more preferably 39 N/5 cm or less, even more preferably 38 N/5 cm or less, further preferably 37 N/5 cm or less, and particularly preferably 36 N/5 cm or less. The lower limit thereof is not particularly limited, and the stress is preferably 20 N/5 cm or less in consideration of suppression of generation of wrinkles after molding. The time of "at 20% elongation" means the time when an item having an initial length of 100 mm has been elongated to a length of 120 mm, for example.

The elongation at break and the stress at 20% elongation of the nonwoven fabric 1 can be measured by, for example, the following method. First, five sample pieces each having a sample width of 5 cm and a sample length of 20 cm are cut out from the nonwoven fabric 1 in each of the longitudinal direction and the lateral direction. Next, a sample is set at a distance between chucks of 5 cm, the sample is put into a furnace heated to 130°C, and after 1 minute, the sample is distorted in the furnace at a tensile rate of 10 cm/min using a universal tensile tester manufactured by ORIENTEC CORPORATION to afford a strain-stress curve. From the strain-stress curve, the elongation at break and the stress at 20% elongation are read, and the average value of five points in each of the longitudinal direction and the lateral direction may be taken as the elongation at break and the stress at 20% elongation.

In producing the nonwoven fabric 1, the production methods described in JP-A-2017-222950 and JP-A-2017-222951 may be referred to.

The resin layer 2 laminated on the nonwoven fabric 1 includes a resin having a number average molecular weight of 5,000 or more and 150,000 or less (hereinafter simply referred to as resin A in some cases). When the number average molecular weight is 5,000 or more, the toughness of the resin layer 2 is easily improved, and the resin easily follows deformation during molding. The number average molecular weight is preferably 10,000 or more, and more preferably 20,000 or more. On the other hand, owing to the number average molecular weight being 150,000 or less, when a solvent is mixed with the resin and applied to the nonwoven fabric 1 to form the resin layer 2, the viscosity of the solution can be easily reduced, so that the resin is easily applied. In addition, even when the resin layer 2 is formed by heating and melting the resin and attaching it to the nonwoven fabric 1, the viscosity of the resin in a molten state can be easily reduced, so that the resin easily penetrates into the nonwoven fabric 1. As a result, the adhesive strength of the resin layer 2 to the nonwoven fabric 1 is improved, and the resin layer 2 hardly peels off during molding. The number average molecular weight can be determined in terms of polystyrene using, for example, a gel permeation chromatography (GPC) apparatus.

In 100% by mass of the resin layer, the content of the resin A is preferably 60% by mass or more, more preferably 75% by mass or more, even more preferably 90% by mass or more, further preferably 95% by mass or more, and particularly preferably 98% by mass or more.

As the resin A, a thermoplastic resin is preferable, and an amorphous thermoplastic resin is more preferable. As a result, the sheet for molding 10 is easily thermoformed. Specifically, the resin A is preferably at least one selected from the group consisting of a polyester-based resin, a polyester urethane-based resin, a polyamide-based resin, a polyamideimide-based resin, a phenoxy-based resin, an olefin-based resin, and an acrylic resin, and more preferably a polyester-based resin.

The polyester-based resin is formed by reacting mainly a carboxylic acid component with a hydroxyl group component. Examples of the carboxylic acid component include terephthalic acid, isophthalic acid, adipic acid, azelaic acid, sebacic acid, 1,4-cyclohexanedicarboxylic acid, 1,3-cyclohexanedicarboxylic acid, 1,2-cyclohexanedicarboxylic acid, 4-methyl-1,2-cyclohexanedicarboxylic acid, dimer acid, hydrogenated dimer acid, and naphthalenedicarboxylic acid. These may be used singly or two or more kinds thereof may be used in combination. Examples of the hydroxyl group component include ethylene glycol, 1,2-propanediol, 1,3-propanediol, 1,2-butanediol, 1,3-butanediol, 1,4-butanediol, 2-methyl-1,3-propanediol, 1,5-pentanediol, 1,6-hexanediol, 3-methyl-1,5-pentanediol, dipropylene glycol, diethylene glycol, neopentyl glycol, 2,2,4-trimethyl-1,3-pentanediol, tricyclodecanedimethanol, neopentyl glycol hydroxypivalinate, 1,9-nonanediol, 2-methyloctanediol, 1,10-dodecanediol, 2-butyl-2-ethyl-1,3-propanediol, polytetramethylene glycol, polyoxymethylene glycol, and cyclohexanedimethanol. These may be used singly or two or more kinds thereof may be used in combination.

Examples of the polyester urethane-based resin include those obtained by addition polymerization reaction of a polyester polyol with a polyisocyanate. Examples of the polyester polyol include those obtained by condensation reaction of a polybasic acid, such as dipic acid, azelaic acid, sebacic acid, terephthalic acid, isophthalic acid, phthalic acid, and succinic acid, with a polyhydric alcohol, such as propylene glycol, ethylene glycol, tetramethylene glycol, butanediol, hexanediol, and neopentyl glycol. Examples of the polyisocyanate include aromatic diisocyanates such as 4,4'-diphenylmethane diisocyanate (MDI), tolylene diisocyanate (TDI), and xylylene diisocyanate (XDI); aliphatic diisocyanates such as hexamethylene diisocyanate (HDI) and lysine methyl ester diisocyanate (LDI); and alicyclic diisocyanates such as dicyclohexylmethane diisocyanate (HMDI) and isophorone diisocyanate (IPDI). These may be used singly or two or more kinds thereof may be used in combination.

The polyamide-based resin is a polymer having an amide linkage in the molecule. Examples of the polyamide-based resin include nylon 6,6, nylon 6,9, nylon 6,10, nylon 6,12, nylon 6, nylon 12, nylon 11, and nylon 4,6. These may be used singly or two or more kinds thereof may be used in combination.

The polyamideimide-based resin is a polymer having an amide linkage and an imide linkage. Examples of the polyamideimide-based resin include those obtained by reacting an acid component with a diamine.

Examples of the acid component include trimellitic acid, an anhydride thereof, and a chloride thereof; tetracarboxylic acids such as pyromellitic acid, biphenyltetracarboxylic acid, biphenylsulfonetracarboxylic acid, benzophenonetetracarboxylic acid, biphenyl ether tetracarboxylic acid, ethylene glycol bistrimellitate, and propylene glycol bistrimellitate, and anhydrides thereof; aliphatic dicarboxylic acids such as oxalic acid, adipic acid, malonic acid, sebacic acid, azelaic acid, dodecanedicarboxylic acid, dicarboxypolybutadiene, dicarboxypoly(acrylonitrile-butadiene), and dicarboxypoly(styrene-butadiene); alicyclic dicarboxylic acids such as 1,4-cyclohexanedicarboxylic acid, 1,3-cyclohexanedicarboxylic acid, 4,4'-dicyclohexylmethanedicarboxylic acid, and dimer acid; and aromatic dicarboxylic acids such as terephthalic acid, isophthalic acid, diphenylsulfonedicarboxylic acid, diphenyl ether dicarboxylic acid, and naphthalenedicarboxylic acid. These may be used singly or two or more kinds thereof may be used in combination.

Examples of the diamine include aliphatic diamines such as ethylenediamine, propylenediamine, and hexamethylenediamine, and diisocyanates thereof; alicyclic diamines such as 1,4-cyclohexanediamine, 1,3-cyclohexanediamine, isophoronediamine, and 4,4'-dicyclohexylmethanediamine, and diisocyanates thereof; and aromatic diamines such as m-phenylenediamine, p-phenylenediamine, 4,4'-diaminodiphenylmethane, 4,4'-diaminodiphenyl ether, 4,4'-diaminodiphenylsulfone, benzidine, o-tolidine, 2,4-tolylenediamine, 2,6-tolylenediamine, and xylylenediamine, and diisocyanates thereof. These may be used singly or two or more kinds thereof may be used in combination.

Examples of the phenoxy-based resin include a resin obtained by reacting an epihalohydrin with a dihydric phenol compound, and a resin obtained by reacting a divalent epoxy compound with a dihydric phenol compound. Specific examples thereof include bisphenol type phenoxy resins such as bisphenol A type phenoxy resins, bisphenol F type phenoxy resins, bisphenol S type phenoxy resins, bisphenol M type phenoxy resins, bisphenol P type phenoxy resins, bisphenol Z type phenoxy resins, and phenoxy resins having two or more types of bisphenol skeletons, novolac type phenoxy resins, and naphthalene type phenoxy resins. These may be used singly or two or more of them may be used in combination.

Examples of the olefin-based resin include homopolymers or copolymers of olefins such as ethylene, propylene, and butene; copolymers of such olefins with copolymerizable monomer components; or maleic anhydride-modified products thereof. The olefin-based resin may be at least one selected from the group consisting of polyethylene, polypropylene, an ethylene-vinyl acetate copolymer, an ethylene-ethyl acrylate copolymer, an ethylene-acrylic acid copolymer, an ethylene-methyl methacrylate copolymer, an ethylene-α-olefin copolymer, an ethylene-propylene copolymer, an ethylene-butene copolymer, and a propylene-butene copolymer.

Examples of the acrylic resin include those obtained by polymerizing or copolymerizing (meth)acrylic monomers such as (meth)acrylic acid, methyl (meth)acrylate, ethyl (meth)acrylate, n-propyl (meth)acrylate, n-butyl (meth)acrylate, t-butyl (meth)acrylate, 2-ethylhexyl (meth)acrylate, cyclohexyl (meth)acrylate, lauryl (meth)acrylate, tridecyl (meth)acrylate, stearyl (meth)acrylate, 2-hydroxyethyl (meth)acrylate, 2-hydroxypropyl (meth)acrylate, (meth)acrylamide, (meth)acrylonitrile, and glycidyl (meth)acrylate. These may be used singly or two or more of them may be used in combination.

The resin layer 2 may contain, in addition to the resin A, a crosslinking agent such as an epoxy compound, an oxazoline compound, carbodiimide, melamine, or blocked isocyanate; a flame retardant such as antimony oxide, aluminum hydroxide, and magnesium hydroxide; a plasticizer such as phthalic acid esters and adipic acid esters; a hydrolysis inhibitor such as carbodiimide; an electromagnetic wave shielding filler such as aluminum, zinc, iron, silver, copper, and zinc oxide; a sound-absorbing filler such as silica; etc. These additives may be used singly or two or more of them may be used in combination. The resin layer 2 preferably contains a crosslinking agent. As the crosslinking agent, blocked isocyanate is preferred. The content of the crosslinking agent is preferably 2 parts by mass or more, more preferably 4 parts by mass or more, and preferably 20 parts by mass or less, more preferably 14 parts by mass or less, per 100 parts by mass of the resin A.

Preferably, in the sheet for molding 10, no damaged portion is formed in the resin layer 2 and the nonwoven fabric 1 after the molding processing according to JIS 1096 (2010) 8.18.2B method as described below.

### < Molding processing conditions >

A sheet for molding 10 is cut into a circle having a diameter of 72 mm. Next, a convex mold including both a cylindrical portion with a diameter of 25 mm and a hemispherical portion with a radius of 12.5 mm provided at the tip of the cylindrical portion and a concave mold capable of being fitted to the hemispherical portion are prepared. Next, the sheet for molding 10 is disposed on the concave mold with the resin layer 2 side facing the concave mold, and a ring-shaped pressing plate is placed on the peripheral edge portion of the sheet for molding 10. Next, heating is performed under the conditions of a heating temperature of 140°C and a heating time of 1 minute, and thereafter, the hemispherical portion and the cylindrical portion are pushed by 20 mm in the vertical direction against the sheet for molding 10 at a speed of 20 mm/min, and then the hemispherical portion and the cylindrical portion are held for 30 seconds, and then released. Thereafter, the molded article is cooled with cold air blown from a dryer for 1 minute, and then taken out.

In the sheet for molding, the resin layer 2 preferably has a peel strength of 2 N/cm or more. This makes it difficult for the resin layer 2 to be damaged during molding. Therefore, the peel strength of the resin layer 2 is more preferably 3 N/cm or more, and further preferably 4 N/cm or more. On the other hand, the upper limit is not particularly limited, and the peel strength may be, for example, 15 N/cm or less, or may be 10 N/cm or less. The peel strength of the resin layer 2 can be measured by a method described in Examples described later.

The resin layer 2 can be formed on the nonwoven fabric 1 by a transfer method, a screen printing method, or the like. In performing the transfer method or the like, resin may be heated and melted, or a solvent such as methyl ethyl ketone may be mixed with resin.

The present invention also includes a molded article obtained by molding the sheet for molding 10. In molding, the sheet for molding 10 may be subjected to drawing such as shallow drawing or deep drawing under, for example, a heating condition of 100 to 180°C. The shape of processing is not limited, and cylindrical drawing processing, rectangular tube drawing processing, conical drawing processing, pyramid drawing processing, spherical head drawing processing, other irregular drawing processing, etc. may be performed.

Birefringence (Δn): Ten arbitrary points of the nonwoven fabric were chosen, single fibers were taken out, the fiber diameter and the retardation were read using a deflection microscope OPTIPHOT-POL type manufactured by Nikon Corporation, and the birefringence (Δn) was determined.

Average thickness of nonwoven fabric: The average thickness of a nonwoven fabric was measured according to 6.1 of JIS L 1913 (2010).

Basis weight of nonwoven fabric: The basis weight of a nonwoven fabric was determined based on "mass per unit area" of JIS L 1913 (2010), 6.2.

Average thickness of non-infiltrating portion: In a region of 10 mm square on the surface of the non-infiltrating portion of the sheet for molding were chosen and marked three points, and then the sheet for molding was frozen with liquid nitrogen. Next, the sheet for molding was cut in the thickness direction such that each point could be observed. Thereafter, each cross section was observed with a stereomicroscope manufactured by LEICA at a magnification of twice, and in the image, a straight line was drawn in the thickness direction from one of the above three points (point A) on the surface of the non-infiltrating portion. The distance (µm) between the point A and the intersection (point B) of the straight line and the surface of the nonwoven fabric was measured, and the average value thereof was taken as the average thickness (µm) of the non-infiltrating portion.

Average thickness of infiltrating portion: In the image of each of the cross sections, the distance (µm) between the intersection (point C) of the straight line drawn in the thickness direction and the infiltrating surface of the infiltrating portion and the point B of the surface of the nonwoven fabric was measured, and the average value thereof was taken as the average thickness (µm) of the infiltrating portion.

Number average molecular weight of resin: A chromatogram was measured using a gel permeation chromatography (GPC) apparatus manufactured by Shimadzu Corporation, and the number average molecular weight (Mn) of the resin was determined based on a calibration curve using standard polystyrene.

Peel strength: The sheet for molding was cut into a length of 100 mm and a width of 250 mm. Thereafter, a hot-melt tape having a width of 20 mm and a thickness of 25 pm manufactured by San Chemicals, Ltd. was thermocompression-bonded to the resin layer of the sheet for molding with an iron heated to a surface temperature of 120°C. Thereafter, using an autograph tensile tester manufactured by Shimadzu Corporation, the hot melt tape was peeled off together with the resin layer under the conditions of an autograph speed of 300 mm/min, a peeling distance of 50 mm, and a peeling angle of 180°, and the measurement was repeated twice, and the average value was taken as a peeling strength (N/cm). The right of the decimal point was rounded off.

Evaluation of moldability: The following molding processing was performed in accordance with JIS 1096 (2010) 8.18.2B method to evaluate the moldability of a sheet for molding. In the surface observation at the time of molding processing, the case where at least one of the resin layer and the nonwoven fabric had a damaged portion was evaluated as ×, and the case where the resin layer and the nonwoven fabric had no damaged portion was evaluated as ∘.

### < Molding processing conditions >

A sheet for molding was cut into a circle having a diameter of 72 mm. Next, a convex mold including both a cylindrical portion with a diameter of 25 mm and a hemispherical portion with a radius of 12.5 mm provided at the tip of the cylindrical portion and a concave mold capable of being fitted to the hemispherical portion were prepared. Next, the sheet for molding was disposed on the concave mold with the resin layer side facing the concave mold, and a ring-shaped pressing plate was placed on the peripheral edge portion of the sheet for molding. Next, heating was performed under the conditions of a heating temperature of 140°C and a heating time of 1 minute, and thereafter, the hemispherical portion and the cylindrical portion were pushed by 20 mm in the vertical direction against the sheet for molding at a speed of 20 mm/min, and then the hemispherical portion and the cylindrical portion were held for 30 seconds, and then released. Thereafter, the molded article was cooled with cold air blown from a dryer for 1 minute, and then taken out.

### Example 1

Using a spunbonded spinning facility, a resin prepared by adding 0.40% by mass of a styrene-methyl methacrylate-maleic anhydride copolymer having a glass transition temperature of 122°C (PLEXIGLAS HW55 (hereinafter referred to as "HW55") available from Rohm GmbH & Co. KG to polyethylene terephthalate (hereinafter referred to as "PET") having an intrinsic viscosity of 0.63 dl/g was spun through a spinneret having an orifice diameter of 0.23 mm at a single hole discharge rate of 0.75 g/min. Furthermore, dry air was supplied to the ejector at a pressure (jet pressure) of 0.6 kg/cm², stretching was performed in one step, and fibers were collected while being opened on a lower conveyor, affording a continuous fiber fleece. The continuous fiber fleece obtained had a fiber diameter of 22.0 µm, a birefringence of 0.0120, and a conversion spinning rate of 1430 m/min.

Using a pair of temporary thermocompression bonding rolls composed of two flat rolls adjusted to a surface temperature of 80°C each and a pressing pressure of 8 kN/m, the obtained continuous fiber fleece was temporarily pressure-bonded, and then subjected to main pressure-bonding under the conditions of a surface temperature of the rolls of 145°C, a pressing pressure of 3.0 kgf/cm², a processing time of 9.3 seconds, and a processing speed of 8.4 m/min while being surface-restrained with a felt calender, thereby affording a spunbonded nonwoven fabric. The nonwoven fabric had a basis weight of 210 g/m² and a thickness of 650 µm.

Next, the following resin and solvent were mixed in the following proportions, then heated to 30°C, and dissolved by a stirrer, and a crosslinking agent was added in the following proportions to afford a coating material for a resin layer.
- Resin: VYLON BX-1001 (manufactured by Toyobo Co., Ltd.), 100 parts
- Solvent: Methyl ethyl ketone, 200 parts
- Crosslinking agent: Blocked isocyanate 7960 (manufactured by Baxenden), 8 parts

Further, a coating material for a resin layer was applied to a release film SP3000 #75 (manufactured by Toyo Cloth Co., Ltd.) at a rate of 450 g per square meter using a comma coater. Subsequently, the resultant was dried in a dryer at 150°C for 3 minutes, affording a resin layer with a release film.

Next, the resin layer with the release film and the spunbonded nonwoven fabric were laminated with the resin layer side of the resin layer with a release film facing the surface of the spunbonded nonwoven fabric, and were thermocompression bonded under the conditions of 60°C and 20 N/cm². The obtained laminate with the release film was allowed to stand for 48 hours in a room heated to 60°C. Thereafter, the release film was peeled off, affording a sheet for molding.

### Comparative Example 1

A laminate with a release film was obtained in the same manner as in Example 1 except that a polyester spunbonded nonwoven fabric (ecule (registered trademark) W6B 61A) manufactured by Toyobo Co., Ltd. was used as a nonwoven fabric, and the laminate was left standing for 48 hours in a room heated to 60°C, and then the release film was peeled off, affording a sheet for molding. The nonwoven fabric had a basis weight of 210 g/m² and a thickness of 650 pm.

### Comparative Example 2

The following resin and solvent were mixed in the following proportions, then heated to 30°C, and dissolved by a stirrer, and a crosslinking agent was added in the following proportions to afford a coating material for a resin layer.
- Resin: Acrylic resin having a number average molecular weight corresponding to 180,000 (commercially available product), 100 parts
- Solvent: Methyl ethyl ketone, 150 parts Dimethylformamide, 50 parts
- Crosslinking agent: CORONATE L (manufactured by Nippon Polyurethane Industry Co., Ltd.), 8 parts

Next, using the same spunbonded nonwoven fabric as in Example 1, a laminate with a release film was obtained in the same manner as in Example 1, and the laminate was left standing for 48 hours in a room heated to 60°C, and then the release film was peeled off, affording a sheet for molding. Each evaluation was performed using these sheets for molding. The measurement results are shown in Table 1. The nonwoven fabric had a basis weight of 210 g/m² and a thickness of 650 pm.

**[Table 1]**

| | | Example 1 | Comparative Example 1 | Comparative Example 2 |
|---|---|---|---|---|
| Resin layer | Type of resin | Polyester-based resin | Polyester-based resin | Acrylic resin |
| | Number average molecular weight of resin (Mn) | 30000 | 30000 | 180000 |
| | Average thickness of non-infiltrating portion (µm) | 44 | 47 | 62 |
| | Average thickness of infiltrating portion (µm) | 24 | 23 | 4 |
| Nonwoven fabric | Type | Spunbond | Spunbond | Spunbond |
| | Birefringence (Δn) | 0.015 | 0.095 | 0.015 |
| Moldability | | ○ | X | X |
| Peel strength (N/cm) | | 4.8 | 4.8 | 1.8 |

The sheet for molding of Example 1 could be molded without causing a damaged portion in the spunbonded nonwoven fabric and the resin layer in the drawing processing with an indentation amount of 20 mm.

On the other hand, in the sheet for molding of Comparative Example 1, the birefringence Δn of the fibers of the spunbonded nonwoven fabric was out of the range of 0.005 or more and 0.050 or less, and the spunbonded nonwoven fabric was broken in the drawing processing to an indentation amount of 20 mm. Further, as a result of performing the same drawing processing with an indentation amount of 10 mm, it was found that the spunbonded nonwoven fabric was broken even with an indentation amount of 10 mm.

In the sheet for molding of Comparative Example 2, the number average molecular weight of the resin of the resin layer exceeded the range of 5,000 or more and 150,000 or less, and in drawing processing with an indentation amount of 20 mm the resin layer peeled and the resin layer was broken. Further, as a result of performing the same drawing processing with an indentation amount of 10 mm, it was found that the resin layer peeled and the resin layer was broken even with an indentation amount of 10 mm.

### DESCRIPTION OF REFERENCE SIGNS

- 1: Nonwoven fabric
- 1s: Surface of nonwoven fabric
- 2: Resin layer
- 3: Infiltrating portion
- 3s: Infiltrating surface of infiltrating portion
- 4: Non-infiltrating portion
- 4s: Surface of non-infiltrating portion
- 10: Sheet for molding

## Claims

1. A sheet for molding comprising a nonwoven fabric and a resin layer laminated on the nonwoven fabric, wherein
the nonwoven fabric comprises a fiber having a birefringence Δn of 0.005 or more and 0.050 or less; and
the resin layer comprises a resin having a number average molecular weight of 5,000 or more and 150,000 or less, and has an infiltrating portion infiltrating into the nonwoven fabric and a non-infiltrating portion not infiltrating into the nonwoven fabric,
wherein the number average molecular weight is determined as outlined in the description.

2. The sheet for molding according to claim 1, wherein the fiber comprises a thermoplastic resin having an intrinsic viscosity of 0.3 dl/g or more and 0.9 dl/g or less, wherein the intrinsic viscosity is determined as outlined in the description.

3. The sheet for molding according to claim 1 or 2, wherein the resin is at least one member selected from the group consisting of a polyester-based resin, a polyester urethane-based resin, a polyamide-based resin, a polyamideimide-based resin, a phenoxy-based resin, an olefin-based resin, and an acrylic resin.

4. The sheet for molding according to claim 2, wherein the fiber further comprises a high Tg organic compound being higher in glass transition temperature than the thermoplastic resin.

5. The sheet for molding according to any one of claims 1 to 4, wherein the resin layer further comprises a crosslinking agent.

6. The sheet for molding according to any one of claims 1 to 5, wherein an average thickness of the non-infiltrating portion is smaller than an average thickness of the nonwoven fabric, wherein the average thickness of the non-infiltrating portion and the average thickness of the nonwoven fabric are determined as outlined in the description.

7. The sheet for molding according to any one of claims 1 to 6, wherein an average thickness of the non-infiltrating portion is larger than an average thickness of the infiltrating portion, wherein the average thickness of the non-infiltrating portion and the average thickness of the infiltrating portion are determined as outlined in the description.

8. A molded article obtained by molding the sheet for molding according to any one of claims 1 to 7.

## Patentansprüche

1. Folie zum Formen, umfassend einen Vliesstoff und eine auf den Vliesstoff laminierte Harzschicht, wobei
der Vliesstoff eine Faser mit einer Doppelbrechung Δn von 0,005 oder mehr und 0,050 oder weniger umfasst; und
die Harzschicht ein Harz mit einem zahlenmittleren Molekulargewicht von 5000 oder mehr und 150000 oder weniger umfasst und einen infiltrierenden Teil, der in den Vliesstoff infiltriert, und einen nicht-infiltrierenden Teil, der nicht in den Vliesstoff infiltriert, aufweist,
wobei das zahlenmittlere Molekulargewicht wie in der Beschreibung angegeben bestimmt wird.

2. Folie zum Formen nach Anspruch 1, wobei die Faser ein thermoplastisches Harz mit einer intrinsischen Viskosität von 0,3 dl/g oder mehr und 0,9 dl/g oder weniger umfasst, wobei die intrinsische Viskosität wie in der Beschreibung angegeben bestimmt wird.

3. Folie zum Formen nach Anspruch 1 oder 2, wobei das Harz mindestens ein Mitglied ist, ausgewählt aus der Gruppe bestehend aus einem Harz auf Polyesterbasis, einem Harz auf Polyester-Urethanbasis, einem Harz auf Polyamidbasis, einem Harz auf Polyamidimidbasis, einem Harz auf Phenoxybasis, einem Harz auf Olefinbasis und einem Acrylharz.

4. Folie zum Formen nach Anspruch 2, wobei die Faser weiter eine organische Verbindung mit hoher Tg umfasst, die eine höhere Glasübergangstemperatur als das thermoplastische Harz aufweist.

5. Folie zum Formen nach einem der Ansprüche 1 bis 4, wobei die Harzschicht weiter ein Vernetzungsmittel enthält.

6. Folie zum Formen nach einem der Ansprüche 1 bis 5, wobei die durchschnittliche Dicke des nichtinfiltrierenden Teils kleiner ist als die durchschnittliche Dicke des Vliesstoffs, wobei die durchschnittliche Dicke des nichtinfiltrierenden Teils und die durchschnittliche Dicke des Vliesstoffs wie in der Beschreibung angegeben bestimmt werden.

7. Folie zum Formen nach einem der Ansprüche 1 bis 6, wobei die durchschnittliche Dicke des nichtinfiltrierenden Teils größer ist als die durchschnittliche Dicke des infiltrierenden Teils, wobei die durchschnittliche Dicke des nichtinfiltrierenden Teils und die durchschnittliche Dicke des infiltrierenden Teils wie in der Beschreibung angegeben bestimmt werden.

8. Formteil, erhalten durch Formen der Folie zum Formen nach einem der Ansprüche 1 bis 7.

## Revendications

1. Feuille pour moulage comprenant un tissu non tissé et une couche de résine stratifiée sur le tissu non tissé, dans laquelle
le tissu non tissé comprend une fibre ayant une biréfringence Δn de 0,005 ou plus et 0,050 ou moins ; et
la couche de résine comprend une résine ayant un poids moléculaire moyen en nombre de 5000 ou plus et 150 000 ou moins, et a une portion infiltrante s'infiltrant dans le tissu non tissé et une portion non infiltrante ne s'infiltrant pas dans le tissu non tissé,
dans laquelle le poids moléculaire moyen en nombre est déterminé tel qu'exposé dans la description.

2. Feuille pour moulage selon la revendication 1, dans laquelle la fibre comprend une résine thermoplastique ayant une viscosité intrinsèque de 0,3 dl/g ou plus et 0,9 dl/g ou moins, dans laquelle la viscosité intrinsèque est déterminée tel qu'exposé dans la description.

3. Feuille pour moulage selon la revendication 1 ou 2, dans laquelle la résine est au moins un élément sélectionné parmi le groupe constitué d'une résine à base de polyester, d'une résine à base d'uréthane de polyester, d'une résine à base de polyamide, d'une résine à base de polyamideimide, d'une résine à base de phénoxy, d'une résine à base d'oléfine et d'une résine acrylique.

4. Feuille pour moulage selon la revendication 2, dans laquelle la fibre comprend en outre un composé organique à Tg élevée qui est supérieur en température de transition vitreuse à la résine thermoplastique.

5. Feuille pour moulage selon l'une quelconque des revendications 1 à 4, dans laquelle la couche de résine comprend en outre un agent de réticulation.

6. Feuille pour moulage selon l'une quelconque des revendications 1 à 5, dans laquelle une épaisseur moyenne de la portion non infiltrante est inférieure à une épaisseur moyenne du tissu non tissé, dans laquelle l'épaisseur moyenne de la portion non infiltrante et l'épaisseur moyenne du tissu non tissé sont déterminées tel qu'exposé dans la description.

7. Feuille pour moulage selon l'une quelconque des revendications 1 à 6, dans laquelle une épaisseur moyenne de la portion non infiltrante est supérieure à une épaisseur moyenne de la portion infiltrante, dans laquelle l'épaisseur moyenne de la portion non infiltrante et l'épaisseur moyenne de la portion infiltrante sont déterminées tel qu'exposé dans la description.

8. Article moulé obtenu en moulant la feuille pour moulage selon l'une quelconque des revendications 1 à 7.
